# EUROPEAN PATENT SPECIFICATION

(11) **EP 3 879 419 B1**
(45) Date of publication and mention of the grant of the patent: **28.01.2026**
(21) Application number: 18939355.6
(22) Date of filing: 05.11.2018
(51) Int. Cl.: G06F 21/32, G06V 20/64, G06V 40/16, G06V 40/20, G06V 40/40, G06V 40/60

(54) **INFORMATION PROCESSING DEVICE, INFORMATION PROCESSING METHOD, AND RECORDING MEDIUM**
INFORMATIONSVERARBEITUNGSVORRICHTUNG, INFORMATIONSVERARBEITUNGSVERFAHREN UND AUFZEICHNUNGSMEDIUM
DISPOSITIF DE TRAITEMENT D'INFORMATIONS, PROCÉDÉ DE TRAITEMENT D'INFORMATIONS ET SUPPORT D'INFORMATIONS

(43) Date of publication of application: 15.09.2021
(73) Proprietor: NEC Corporation, 108-8001 Tokyo (JP)
(72) Inventor: KATO, Sanae, Tokyo 108-8001 (JP); KUMAZAKI, Junichi, Tokyo 108-8001 (JP); KAWASE, Nobuaki, Tokyo 108-8001 (JP)
(74) Representative: Betten & Resch
(86) International application number: PCT/JP2018/041060
(87) International publication number: WO 2020/095350

(56) References cited:
- EP-A1- 1 990 770
- JP-A- 2003 317 100
- US-A1- 2014 307 929
- US-A1- 2016 063 314
- US-A1- 2016 366 129
- US-A1- 2018 173 980
- US-A1- 2018 173 980
- US-B1- 8 542 879

## Description

### [Technical Field]

This disclosure relates to an information processing apparatus, an information processing method, and a storage medium.

### [Background Art]

Patent Literature 1 discloses an authentication apparatus that checks reality to see if a user is a human or not. The authentication apparatus disclosed in Patent Literature 1 checks reality of a user by determining whether or not a response to a challenge is correct that is information based on which the user to be authenticated inputs information used for an authentication process.

### [Citation List]

### [Patent Literature]

PTL 1: International Publication No. WO 2015/194135 PTL 2: US2018173980

### [Summary of Invention]

When it is determined whether or not there is impersonation by using a photograph or the like based on a user's movement in accordance with a particular instruction such as a challenge as with the art disclosed in Patent Literature 1, the user may be unable to move properly in accordance with the particular instruction. Thus, in the art disclosed in Patent Literature 1, it may be difficult to suitably collect necessary information based on the user's movement.

In view of the problem described above, an example object of this disclosure is to provide an information processing apparatus, an information processing method, and a storage medium that can suitably acquire necessary biometrics information based on a user's movement.

### [Solution to Problem]

According to one example aspect of this disclosure, provided is an information processing apparatus including: a movement instruction unit that instructs a user about a movement; an information acquisition unit that acquires biometrics information on the user from the user instructed about the movement; and a display control unit that controls display directed to the user in accordance with a movement status of the user.

According to another example aspect of this disclosure, provided is an information processing method including: instructing a user about a movement; acquiring biometrics information on the user from the user instructed about the movement; and controlling display directed to the user in accordance with a movement status of the user.

According to yet another example aspect of this disclosure, provided is a non-transitory storage medium storing a program that causes a computer to perform: instructing a user about a movement; acquiring biometrics information on the user from the user instructed about the movement; and controlling display directed to the user in accordance with a movement status of the user.

### [Advantageous Effects of Invention]

An example advantage according to the invention is that necessary biometrics information can be suitably acquired based on a user's movement.

### [Brief Description of Drawings]

Fig. 1 is a block diagram illustrating a configuration of an information processing apparatus according to a first example embodiment of this disclosure.
Fig. 2 is a flowchart illustrating an operation of face authentication of the information processing apparatus according to the first example embodiment of this disclosure.
Fig. 3 is a flowchart illustrating an operation of impersonation determination in the information processing apparatus according to the first example embodiment of this disclosure.
Fig. 4 is a flowchart illustrating an operation of face recognition in the information processing apparatus according to the first example embodiment of this disclosure.
Fig. 5 is a schematic diagram illustrating one example of a login window in the information processing apparatus according to the first example embodiment of this disclosure.
Fig. 6 is a schematic diagram illustrating a face authentication window at the start of acquisition of face images in the information processing apparatus according to the first example embodiment of this disclosure.
Fig. 7 is a schematic diagram illustrating one example of a face authentication window during acquisition of face images in the information processing apparatus according to the first example embodiment of this disclosure.
Fig. 8 is a schematic diagram illustrating one example of a face authentication window at the completion of acquisition of face images in the information processing apparatus according to the first example embodiment of this disclosure.
Fig. 9 is a schematic diagram illustrating one example of a window after face authentication succeeds and login is completed in the information processing apparatus according to the first example embodiment of this disclosure.
Fig. 10 is a schematic diagram illustrating one example of a face authentication window when face authentication fails in the information processing apparatus according to the first example embodiment of this disclosure.
Fig. 11 is a block diagram illustrating a configuration of an information processing apparatus according to a second example embodiment of this disclosure.
Fig. 12 is a block diagram illustrating a configuration of an information processing apparatus according another example embodiment of this disclosure.

### [Description of Embodiments]

### [First Example Embodiment]

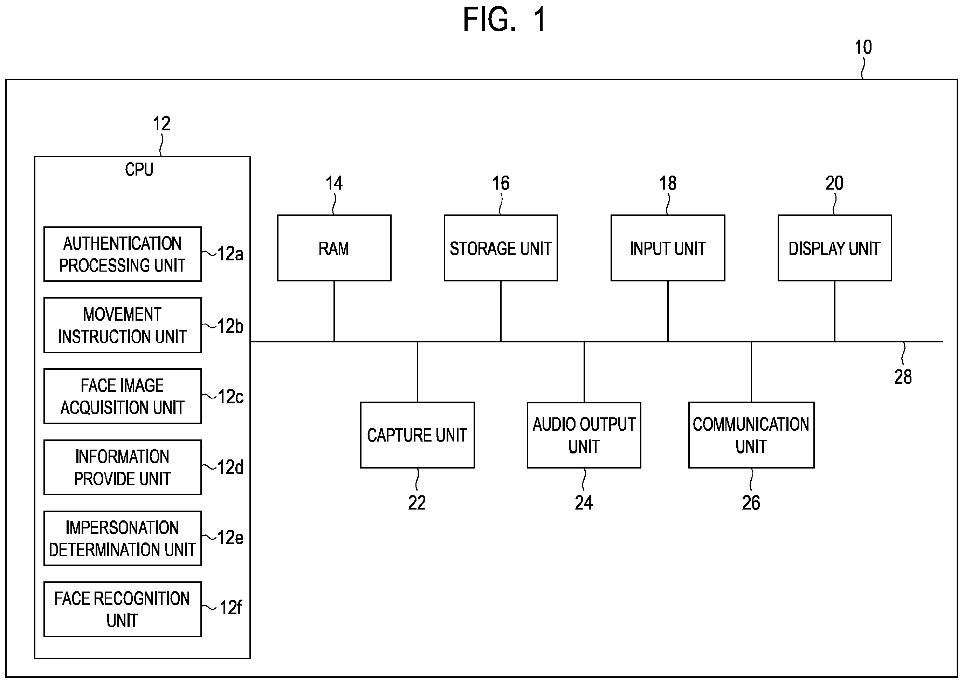

An information processing apparatus and an information processing method according to a first example embodiment of this disclosure will be described by using Fig. 1 to Fig. 10.

First, the configuration of the information processing apparatus according to the present example embodiment will be described by using Fig. 1. Fig. 1 is a block diagram illustrating the configuration of the information processing apparatus according to the present example embodiment.

As illustrated in Fig. 1, an information processing apparatus 10 according to the present example embodiment has a central processing unit (CPU) 12, a random access memory (RAM) 14, a storage unit 16, an input unit 18, a display unit 20, a capture unit 22, an audio output unit 24, and a communication unit 26. The CPU 12, the RAM 14, the storage unit 16, the input unit 18, the display unit 20, the capture unit 22, the audio output unit 24, and the communication unit 26 are connected to a common bus 28.

The information processing apparatus 10 is a smartphone, for example, while not particularly limited. The information processing apparatus 10 may be a tablet type personal computer, a mobile phone, or the like. Further, the information processing apparatus 10 may be a computer apparatus such as a laptop personal computer, a desktop personal computer, or the like, for example. The information processing apparatus 10 can execute various application programs in accordance with an execution instruction from a user using the same.

The CPU 12 operates by executing a program stored in the storage unit 16 and functions as a control unit that controls the operation of the entire information processing apparatus 10. Further, the CPU 12 performs various processes as the information processing apparatus 10 by executing a program stored in the storage unit 16. The RAM 14 provides a memory field necessary for the operation of the CPU 12.

The information processing apparatus 10 according to the present example embodiment performs face authentication for a user when the user logs in a particular application program stored in the storage unit 16. Furthermore, the information processing apparatus 10 is configured to be able to determine impersonation of the user by using a non-living object such as a photograph, a moving image, or the like in face authentication.

Note that the information processing apparatus 10 can also perform the same face authentication at various timings other than at login to a particular application program. For example, the information processing apparatus 10 can also perform the same face authentication for the user at the start of a use of the information processing apparatus 10, such as at system startup or at unlocking of the information processing apparatus 10. Further, for example, the information processing apparatus 10 can also perform the same face authentication for the user at the start of access to a particular resource such as a particular file, a particular directory, a particular folder, or the like stored in the storage unit 16 or the like. In such a way, the information processing apparatus 10 can be configured to perform face authentication at the start of a particular process for the user who requests that process.

The CPU 12 functions as each of the following function units used for face authentication for the user by executing a particular application program stored in the storage unit 16. That is, the CPU 12 functions as an authentication processing unit 12a, a movement instruction unit 12b, a face image acquisition unit 12c, an information provide unit 12d, an impersonation determination unit 12e, and a face recognition unit 12f.

The authentication processing unit 12a causes the display unit 20 to display a login window that requests the user for face authentication and accepts a login request from the user. For example, the user who is a target of face authentication is able to perform touch entry by pushing a particular region such as a login button, a login icon, or the like in a login window displayed on the display unit 20, which is configured integrally with the input unit 18 as a touchscreen display. This enables the user to input a login request to the information processing apparatus 10. Further, the user is able to input a login request to the information processing apparatus 10 by causing the capture unit 22 to capture its own face and inputting the face image to the information processing apparatus 10, for example. Once a login request is input by the user, the authentication processing unit 12a causes the display unit 20 to display a face authentication window used for face authentication.

Further, the authentication processing unit 12a performs face authentication as authentication for the user based on a result of impersonation determination performed by the impersonation determination unit 12e and a result of face recognition performed by the face recognition unit 12f. That is, the authentication processing unit 12a determines whether or not face authentication of the user is successful based on a result of impersonation determination and a result of face recognition and performs a process in accordance with the determination results.

The authentication processing unit 12a determines that the face authentication of the user is successful when it is determined by the impersonation determination unit 12e that there is no impersonation and it is determined by the face recognition unit 12f that there is a matching in face recognition, as described later. In response to determining that face authentication of the user is successful, the authentication processing unit 12a permits login of the user to a particular application program and performs a login process for allowing the user to log in.

On the other hand, when it is determined by the impersonation determination unit 12e that there is impersonation or when it is determined by the face recognition unit 12f that there is no matching in face authentication, the authentication processing unit 12a determines that the face authentication of the user is unsuccessful, that is, the face authentication of the user failed. In response to determining that the face authentication of the user failed, the authentication processing unit 12a denies login of the user to the application program. In this case, the authentication processing unit 12a can perform a failure process such as a process of notifying the user that face authentication failed. For example, the authentication processing unit 12a can display the display indicating that face authentication failed on the display unit 20 and perform notification.

In response to receiving entry of a login request from the user, the movement instruction unit 12b instructs the user, who is a target of face authentication, to perform a particular movement regarding the head captured by a capture unit 22. The movement instruction unit 12b can cause the display unit 20 to display the display providing an instruction about a particular movement and instruct the user about the particular movement. The movement instruction unit 12b can cause the display unit 20 to display an instruction message about a particular movement, a visual symbol that moves as an animation with a particular movement, or the like, for example, as the instruction display of a particular movement. A visual symbol may be, for example, a face icon that is an icon imitating a face, a pictogram, or the like.

A particular movement instructed by the movement instruction unit 12b may be, for example, a movement of shaking the head laterally or vertically, a movement of turning the head around, or the like, while not particularly limited. When a movement of shaking the head is instructed as a particular movement, the movement instruction unit 12b can cause the display unit 20 to display an instruction message "Please shake your head" or cause the display unit 20 to display a face icon that shakes the head in an animation movement, for example.

Further, the movement instruction unit 12b can function as a display control unit that controls and changes the display providing an instruction about a particular movement on the display unit 20, which is display directed to the user, in accordance with the movement state of the user in motion captured by the capture unit 22. For example, the movement instruction unit 12b can control and change the display providing the instruction about a particular movement on the display unit 20 in accordance with a determination result by the face image acquisition unit 12c as to whether or not a particular movement of the user is proper as described below.

For example, specifically, when providing an instruction about a movement of shaking the head as a particular movement, the movement instruction unit 12b controls and changes the display providing the instruction about a particular movement in the following manner, for example.

When it is determined by the face image acquisition unit 12c that the user's movement of shaking the head is proper, the movement instruction unit 12b may stop the face icon's movement of shaking the head displayed on the display unit 20, for example. Further, when it is determined to be proper, the movement instruction unit 12b may change the face icon display so as to have an affirmative facial expression associating that the user's particular movement is proper, for example.

On the other hand, when it is determined by the face image acquisition unit 12c that the user's movement of shaking the head is improper, the movement instruction unit 12b can continue the face icon's movement of shaking the head displayed on the display unit 20 or change the face icon's movement of shaking the head to a wider movement. Further, when it is determined to be improper, the movement instruction unit 12b may also change the face icon display to so as to have a negative facial expression associating that the user's particular movement is improper, for example. Further, when it is determined to be improper, the movement instruction unit 12b may cause the display unit 20 to emphasize and display an instruction message "Please shake your head" or may cause the display unit 20 to display an instruction message "Please shake your head widely."

As discussed above, when it is determined that a user's particular movement is proper, the movement instruction unit 12b can control and change the display providing the instruction about a particular movement so as to indicate that the user's particular movement is proper. Further, when it is determined that a user's particular movement is improper, the movement instruction unit 12b can control and change the display providing the instruction of a particular movement so as to indicate that the user's particular movement is improper.

Further, the movement instruction unit 12b may instruct the user about a particular movement by outputting a voice of a movement instruction from the audio output unit 24 in addition to or instead of the display of movement instruction display on the display unit 20. In such a case, the movement instruction unit 12b can output a voice uttering an instruction message providing an instruction about a particular movement, such as "Please shake your head", from the audio output unit 24.

The face image acquisition unit 12c is an information acquisition unit that acquires a face image that is biometrics information on the user from a moving image captured by the capture unit 22. The face image acquisition unit 12c operates as below to acquire a face image.

The face image acquisition unit 12c determines whether or not a particular movement regarding the user's head in a moving image captured by the capture unit 22 is proper. When the user's particular movement is a movement which can be used in impersonation determination to acquire a plurality of face images that can be used for estimate a three-dimensional shape of a user's head, the face image acquisition unit 12c determines that the user's particular movement is proper. On the other hand, when the user's particular movement is a movement from which such a plurality of face images are unable to be acquired, the face image acquisition unit 12c determines that the user's particular movement is improper. For example, when face images of multiple viewpoints are substantially unable to be acquired because the user's movement is too small, when the user's face has not been captured by the capture unit 22, or the like, it is not possible to acquire a plurality of face images that can be used for estimate a three-dimensional shape of the user's face. Therefore, in these cases, the face image acquisition unit 12c determines that the user's particular movement is improper.

Note that the face image acquisition unit 12c may determine that the user's movement is proper even when a particular movement instructed by the movement instruction unit 12b and the user's movement are not the same. For example, even when the user shakes the head vertically while the movement instruction unit 12b displays an animation of shaking the head laterally, the user's movement may be a movement which can be used in impersonation determination to acquire a plurality of face images that can be used for estimating the three-dimensional shape of the user's face. In such a case, the face image acquisition unit 12c can determine that the user's movement is proper.

In response to determining that the user's particular movement is proper, the face image acquisition unit 12c detects a face image of the user in a moving image captured by the capture unit 22. Furthermore, the face image acquisition unit 12c acquires a face image of the detected user as face information on the user. At this time, the face image acquisition unit 12c evaluates the quality of the detected face image and acquires a high quality face image having a quality above a predetermined quality. For example, the face image acquisition unit 12c can evaluate the quality of a face image based on a quality value calculated for each of a predetermined number of face feature points preset for estimating a three-dimensional shape of a face. The face image acquisition unit 12c is not necessarily required to acquire a face image itself but may extract and acquire a feature amount from a face image as face information.

The face image acquisition unit 12c repeatedly acquires a face image of the user as described above until a time limit, which is a predetermined time period from the time when a particular movement is instructed by the movement instruction unit 12b, has elapsed. Thereby, the face image acquisition unit 12c attempts acquisition of a predefined number of face images necessary for impersonation determination. Note that the time limit used in acquiring face images is preset in accordance with required accuracy of impersonation determination, a time period required to complete authentication, or the like, for example. Further, the predefined number of face images necessary for impersonation determination is preset in accordance with required accuracy of impersonation determination, a time period required to complete authentication, or the like, for example.

Further, the face image acquisition unit 12c functions as a display control unit that causes the display unit 20 to display the progress status of acquisition of face images as display in accordance with the movement status of the user. The face image acquisition unit 12c can cause the display unit 20 to display an acquisition rate of face images in percentage, which is a ratio of the number of acquired face images to the predefined number required for impersonation determination, for example, as the progress status of acquisition of face images in accordance with the movement status of the user. The face image acquisition unit 12c may display the acquisition rate of face images as a numerical value in a form of percentage expression or may display an acquisition rate of face images by using a gage or a progress bar whose length changes in accordance with the acquisition ratio of face images, for example. The shape of a gage or a progress bar indicating an acquisition ratio of face images is not particularly limited, and a bar-like shape, a ring-like shape, or a frame-like shape may be employed, for example. The face image acquisition unit 12c controls and changes the display indicating the progress status of acquisition of face images, which is display directed to the user, in accordance with the acquisition status of face images. The face image acquisition unit 12c can cause the display unit 20 to display the display indicating the progress status of acquisition of face images, such as a gage, a progress bar, or the like, in accordance with the user's movement status. Note that a form of display indicating the progress status of acquisition of face images is not limited to a gage or a progress bar, and various forms of display may be employed.

When the time limit elapses without the predefined number of face images being acquired by the face image acquisition unit 12c and thus acquisition of the predetermined number of face images fails, that is, when a predetermined amount of biometrics information is not acquired within a predetermined time period, the information provide unit 12d provides guidance information to the user. The guidance information is information that may be a reference, a guide, a help, or the like for successful acquisition of the predefined number of face images by the face image acquisition unit 12c when face authentication is again performed. The information provide unit 12d can cause the display unit 20 to display and provide guidance information to the user, for example. Further, the information provide unit 12d may output guidance information by using a voice from the audio output unit 24 and provide the guidance information to the user, for example.

The information provide unit 12d can provide, to the user, guidance information in accordance with a reason for being unable to acquire a face image by the face image acquisition unit 12c. For example, when a face image is unable to be acquired because of an improper movement of the user, the information provide unit 12d can provide guidance information regarding a user's particular movement. Further, for example, when a face image is unable to be acquired because of an improper authentication environment that is an environment where face authentication is performed, the information provide unit 12d can provide guidance information regarding an authentication environment. Further, it is possible to provide, to the user, guidance information regarding a user's particular movement and guidance information regarding an authentication environment in combination.

The information provide unit 12d can provide, as guidance information regarding a user's particular movement, guidance information that guides the user to perform a proper particular movement. For example, for the user instructed to perform a head shaking movement as a particular movement, the information provide unit 12d can display a guidance message regarding a head shaking movement on the display unit 20 or output a guidance message by using a voice from the audio output unit 24 as guidance information. In such a case, guidance message may be "Please shake your head widely", "Please shake your head slowly", "Motion is too fast", or the like.

Further, the information provide unit 12d can provide guidance information that guides the user to perform face authentication in a proper authentication environment as guidance information regarding authentication environment. An authentication environment where guidance information may be provided is not particularly limited and may correspond to brightness of an authentication place that is a place where authentication is performed, a capturing distance that is a distance at which the user is captured by the capture unit 22, or the like, for example.

For example, when a face image above a certain quality is unable to be acquired by the face image acquisition unit 12c because of an excessively bright or excessively dark authentication place, the information provide unit 12d can provide guidance information regarding brightness of the authentication place as guidance information. In such a case, the information provide unit 12d can display a guidance message such as "it is too bright", "it is too dark", or the like on the display unit 20 or output the guidance message as a voice from the audio output unit 24, for example, as guidance information.

Further, for example, when a face image above a certain quality is unable to be acquired by the face image acquisition unit 12c because of an excessively long or excessively short capturing distance by the capture unit 22, the information provide unit 12d can provide guidance information regarding a capturing distance by the capture unit 22. In such a case, the information provide unit 12d can display a guidance message such as "it is too far", "it is too close", or the like on the display unit 20 or output the guidance message as a voice from the audio output unit 24, for example, as guidance information.

Note that the information provide unit 12d can provide guidance information by causing the display unit 20 to display a visual symbol associating the content of a guidance message instead of or in addition to the guidance message. A visual symbol may be, for example, an icon, a pictogram, or the like.

The impersonation determination unit 12e performs impersonation determination based on a plurality of face images acquired by the face image acquisition unit 12c. In impersonation determination, the impersonation determination unit 12e determines whether or not the user's face is impersonated by a non-living object such as a photograph, a moving image, or the like.

The impersonation determination unit 12e estimates a three-dimensional shape of the user's face based on a plurality of face images acquired by the face image acquisition unit 12c in impersonation determination. The plurality of face images acquired by the face image acquisition unit 12c are obtained when the face of the user performing a particular movement is captured by the capture unit 22 and thus are multi-viewpoint images captured from different viewpoints. The impersonation determination unit 12e estimates a three-dimensional shape of the user's face from a plurality of face images, which are multi-viewpoint images. A method of estimating the three-dimensional shape is not particularly limited, and various methods can be used. For example, the impersonation determination unit 12e can estimate a three-dimensional shape of a face image of the user from the plurality of face images acquired by the face image acquisition unit 12c by using a bundle adjustment method.

In estimation of a three-dimensional shape, the impersonation determination unit 12e can perform the following process, for example. That is, the impersonation determination unit 12e acquires face information indicating respective positions of a predetermined number of face feature points in a face image for each plurality of face images acquired by acquired by the face image acquisition unit 12c. The number of face feature points used for acquiring face information may be two or more, for example, which may be specifically ten face feature points at the right eye, the left eye, the nose, the center of the mouth, the right corner of the mouth, the left corner of the mouth, the right cheek, the left cheek, the right side of the chin, and the left side of the chin. Furthermore, the impersonation determination unit 12e associates each of the predetermined number of face feature points between a plurality of face images based on respective pieces of face information of the acquired plurality of face images. The impersonation determination unit 12e can estimate a three-dimensional shape of the user's face based on a result of association of face feature points. According to such a process, each of a predetermined number of face feature points can be uniquely associated between a plurality of face images based on each face information of the plurality of face images. No complex process is required for this association. It is therefore possible to perform the association of face feature points between the plurality of face images more easily and more accurately, and it is possible to estimate a three-dimensional shape more easily and more accurately.

The impersonation determination unit 12e determines whether or not the user's face is impersonated by a non-living object such as a photograph, a moving image, or the like by evaluating the three-dimensional shape of the estimated user's face. For example, the impersonation determination unit 12e can determine whether or not there is impersonation by evaluating whether or not the estimated three-dimensional shape is three-dimensional, that is, whether the estimated three-dimensional shape is three-dimensional or two-dimensional. In such a case, the impersonation determination unit 12e can evaluate whether the three-dimensional shape is three-dimensional or two-dimensional by determining a relationship between an evaluation amount regarding the estimated three-dimensional shape and a preset threshold. As an evaluation amount, a distance, an angle, or the like associated with a particular face feature point or an amount based thereon may be used, for example, without being particularly limited. Note that, as a method of evaluating whether a three-dimensional shape is three-dimensional or two-dimensional, various methods may be used without being particularly limited.

When the impersonation determination unit 12e evaluates that the estimated three-dimensional shape of a face is three-dimensional, the impersonation determination unit 12e determines that the user's face is a face of a living body and is not impersonated. On the other hand, when the impersonation determination unit 12e evaluates that the estimated three-dimensional shape is two-dimensional, the impersonation determination unit 12e determines that the user's face is impersonated by a non-living object such as a photograph, a moving image, or the like.

The face recognition unit 12f performs face recognition based on one or a plurality of face images acquired by the face image acquisition unit 12c. In face recognition, the face recognition unit 12f compares a target face image, which is a face image of the user captured by the capture unit 22 and acquired by the face image acquisition unit 12c, with a registered face image, which is a pre-registered face image of the user, and determines whether or not both face images are matched. For example, the face recognition unit 12f can use a face image having the highest quality, such as a face image in which the user faces front, as a target face image out of a plurality of face images acquired by the face image acquisition unit 12c and compare the target face image with a registered face image. Further, the face recognition unit 12f may perform comparison between each of the plurality of face images and a registered face image. Note that the registered face image, which is registered biometrics information on the user, is prestored and registered in the storage unit 16, for example.

In comparison between both face images, the face recognition unit 12f can calculate a matching score indicating the similarity between a feature amount of a target face image and a feature amount of a registered face image. The higher the similarity between feature amounts of both face images is, the larger the matching score is. When comparison with a registered face image is performed for each of the plurality of face images, the average value, the maximum value, or the like of matching score values calculated in respective comparisons may be used as a matching score. When the matching score is greater than or equal to a predetermined threshold, the face recognition unit 12f can determine that there is a matching in the comparison between a target face image and a registered face image, that is, there is a matching in the face recognition. On the other hand, when the matching score is less than a predetermined threshold, the face recognition unit 12f can determine that there is no matching in the comparison between a target face image and a registered face image, that is, there is no matching in the face recognition.

Note that, at the time before a predefined number of face images are acquired by the face image acquisition unit 12c, the face recognition unit 12f can use an already acquired face image as a target face image and compare that target face image with a registered face image in the same manner as described above. In such a case, at the time when it is determined by the face recognition unit 12f that there is no matching in comparison, the face image acquisition unit 12c can stop acquisition of face images even before a predefined number of face images are acquired.

Note that some or all of the functions of respective units of the CPU 12 described above are not necessarily required to be implemented in the CPU 12 of the information processing apparatus 10 that is a single apparatus but may be implemented by other external apparatuses such as a server. For example, the functions of the impersonation determination unit 12e, the face recognition unit 12f, or the like of the functions of respective units of the CPU 12 described above may be implemented by a CPU of a server communicably coupled to the information processing apparatus 10 via a network. In such a case, the CPU 12 of the information processing apparatus 10 transmits a process request from the function of the impersonation determination unit 12e, the face recognition unit 12f, or the like to the server via the network together with data such as a face image, a feature amount extracted from a face image, or the like necessary for the requested process. Further, the CPU 12 receives a process result obtained by the function of the impersonation determination unit 12e, the face recognition unit 12f, or the like from the server via the network.

The storage unit 16 is formed of a storage medium such as a nonvolatile memory, such as a flash memory, a hard disk drive, or the like. The storage unit 16 stores a program such as a particular application program executed by the CPU 12, data referenced by the CPU 12 in executing the program, or the like. For example, the storage unit 16 stores a face image of the user acquired from an image captured by the capture unit 22. Further, the storage unit 16 stores a registered face image of the user used in face recognition, for example.

The input unit 18 accepts user input of information, an instruction, or the like to the information processing apparatus 10. The user may input various information or input an instruction to perform a process into the information processing apparatus 10 via the input unit 18. The input unit 18 is formed of a touchscreen embedded in the display unit 20, for example. Note that the input unit 18 may be formed of a keyboard, a mouse, or the like, for example.

The display unit 20 displays various windows such as an execution window of a particular application program under the control of the CPU 12. For example, an execution window of a particular application program includes a login window, a face authentication window, a window after login, or the like. For example, the display unit 20 is formed of a liquid crystal display, an organic light emitting diode (OLED) display, or the like and configured as a touchscreen display together with the input unit 18.

The capture unit 22 captures an image including a face of the user who performs face authentication. For example, the capture unit 22 is formed of a digital camera that can capture a moving image and acquires two-dimensional image forming a moving image at a predetermined framerate.

The communication unit 26 transmits and receives data to and from an external apparatus such as a server via a network under the control of the CPU 12. The communication standard, the communication scheme, or the like of the communication unit 26 is not particularly limited and may be a wireless scheme or a wired scheme.

In such a way, the information processing apparatus 10 according to the present example embodiment is configured.

In the information processing apparatus 10 according to the present example embodiment, the movement instruction unit 12b controls and changes the display providing an instruction about a particular movement on the display unit 20 in accordance with the movement status of the user during a movement captured by the capture unit 22. This enables the user to determine whether or not his/her movement responding to an instruction of a particular movement is proper and appropriately correct his/her movement. Further, the face image acquisition unit 12c causes the display unit 20 to display the progress status of acquisition of face images. The user is able to also use the progress status of acquisition of face images as a material for determining whether or not his/her movement is proper. Therefore, according to the information processing apparatus 10 of the present example embodiment, it is possible to cause the user to move properly in accordance with an instruction of a particular movement, and a face image that is biometrics information necessary for determination of impersonation can be acquired properly based on the user's movement.

Further, in the information processing apparatus 10 according to the present example embodiment, the information provide unit 12d provides guidance information when acquisition of a predefined number of face images by the face image acquisition unit 12c fails. Therefore, according to the information processing apparatus 10 of the present example embodiment, it is possible to cause the user to act so that the predefined number of face images can be acquired by the face image acquisition unit 12c when the user again performs face authentication.

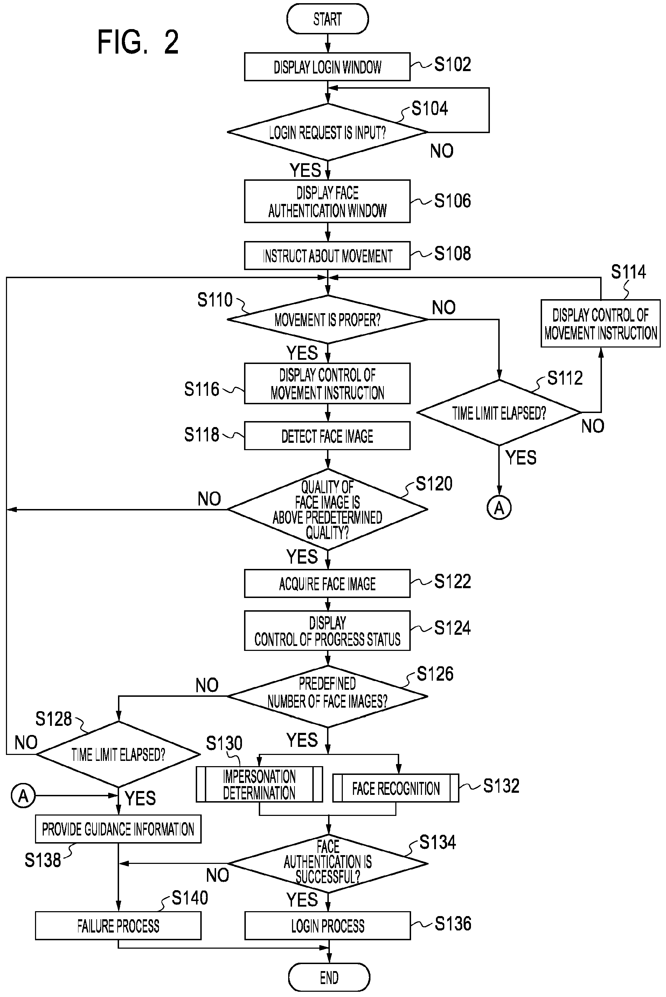

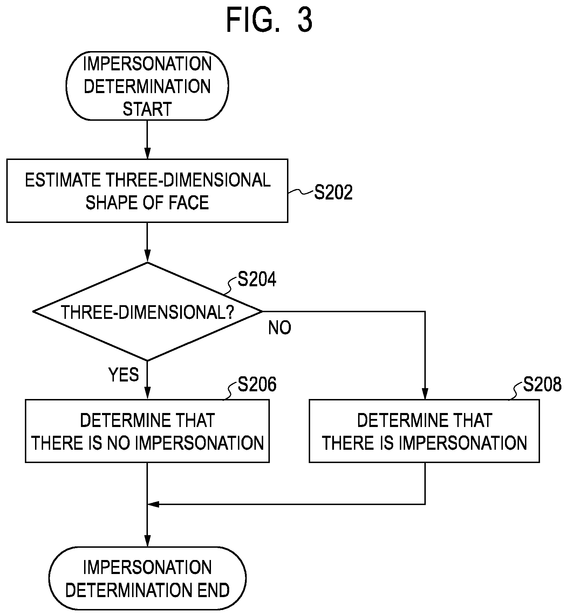

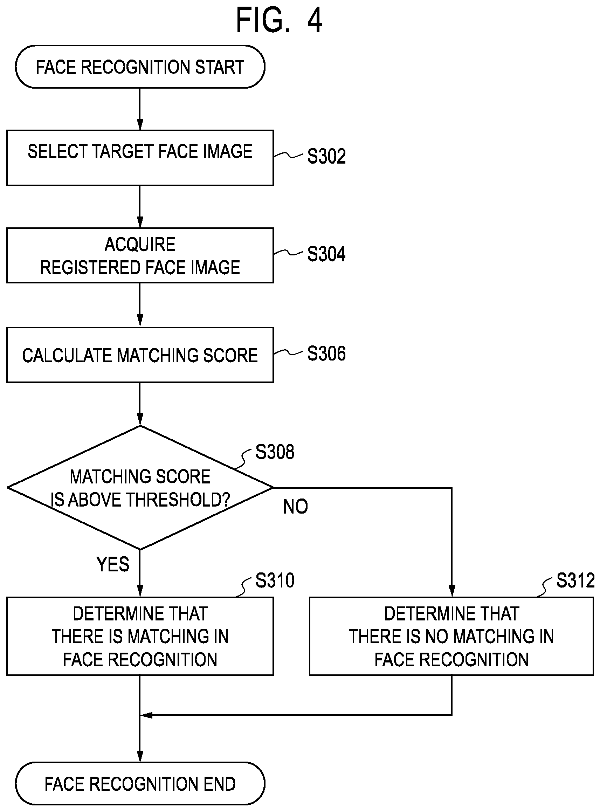

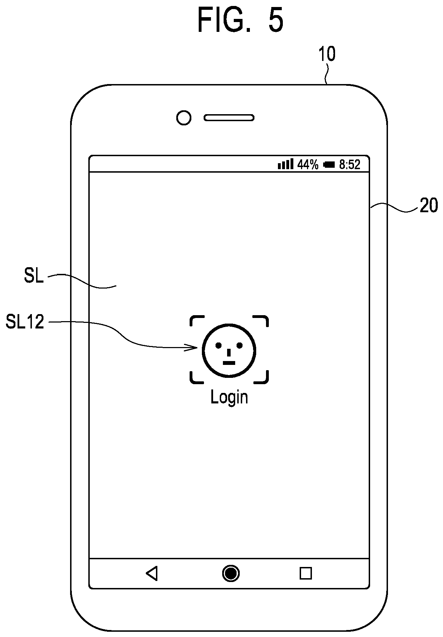

The operation of face authentication in the information processing apparatus 10 according to the present example embodiment will be further described below by using Fig. 2 to Fig. 10. Fig. 2 is a flowchart illustrating the operation of face authentication in the information processing apparatus 10. Fig. 3 is a flowchart illustrating the operation of impersonation determination in the information processing apparatus 10. Fig. 4 is a flowchart illustrating the operation of face recognition in the information processing apparatus 10. Fig. 5 to Fig. 10 are schematic diagrams illustrating examples of a series of windows on the display unit 20 during a face authentication operation in the information processing apparatus 10, respectively. In response to the operation of face authentication in the information processing apparatus 10 being performed, an information processing method according to the present example embodiment is performed.

First, when a particular application program is executed by the CPU 12, the authentication processing unit 12a causes the display unit 20 to display a login window that requests face authentication from the user and accepts a login request of the user as illustrated in Fig. 2 (step S102).

Fig. 5 illustrates one example of a login window SL that requests face authentication. As illustrated in Fig. 5, on the login window SL, a face icon SL12 indicating that face authentication is requested in a login operation is displayed. For example, by pushing the face icon SL12, the user may input, to the information processing apparatus 10, a login request that requests login to a particular application program.

The authentication processing unit 12a continuously determines whether or not a login request is input by the user (step S104) and stands by until a login request is input (step S104, NO).

In response to determining that a login request is input (step S104, YES), the authentication processing unit 12a causes the display unit 20 to display a face authentication window used for performing face authentication (step S106).

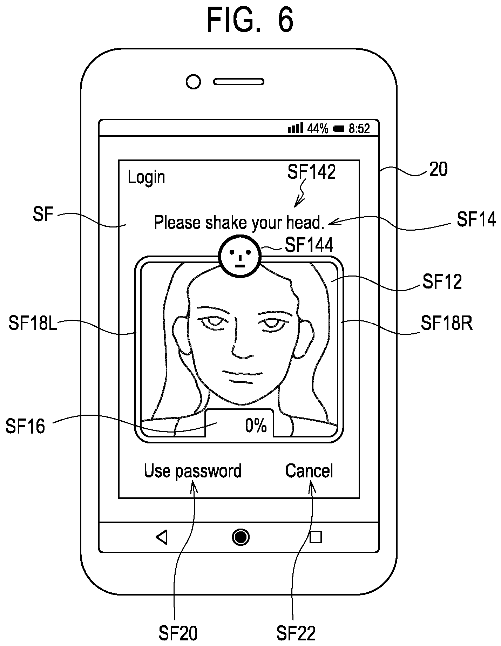

Fig. 6 illustrates one example of a face authentication window SF at the start of face authentication, that is, at the start of acquisition of a face image by the face image acquisition unit 12c. As illustrated in Fig. 6, the face authentication window SF includes a moving image display region SF12 that displays a moving image captured by the capture unit 22 and a movement instruction display region SF14 that displays an instruction about a particular movement from the movement instruction unit 12b. Further, the face authentication window SF includes a bar-like gage SF16 indicating the progress status of acquisition of face images and frame-like gages SF18L and SF18R similarly indicating the progress status of acquisition of face images. Further, the face authentication window SF includes a "Use password" button SF20 used for switching the authentication scheme to a password scheme and a "Cancel" button SF22 used for cancelling face authentication.

The moving image display region SF12 displays, in substantially real time, a moving image including a face of the user captured by the capture unit 22. The user is able to determine whether or not his/her movement to the instruction of a particular movement from the movement instruction unit 12b is proper by checking the moving image of his/her face displayed in the moving image display region SF12.

The movement instruction display region SF14 displays an instruction message SF142 providing an instruction about a particular movement and a face icon SF144 similarly providing an instruction about a particular movement. The instruction message SF142 indicates the content of a particular movement instructed by the movement instruction unit 12b. Further, the face icon SF144 moves as an animation with a particular movement instructed by the movement instruction unit 12b. The movement instruction unit 12b instructs the user about a particular movement by using the instruction message SF142 such as "Please shake your head", for example. Further, the movement instruction unit 12b instructs the user about a particular movement by using the face icon SF144 that shakes the head as an animation movement, for example.

The bar-like gage SF16 changes the length thereof in accordance with the progress status of acquisition of face images performed by the face image acquisition unit 12c. Specifically, the bar-like gage SF16 changes the length thereof so as to extend from the left to the right in accordance with an acquisition rate of face images performed by the face image acquisition unit 12c. Further, inside the bar-like gage SF16, the acquisition rate of face images is displayed as a numerical value in a form of percentage representation.

The frame-like gages SF18L and SF18R are arranged so as to form the left half frame portion and the right half frame portion around the moving image display region SF12, respectively. The frame-like gages SF18L and SF18R changes the lengths thereof in accordance with the progress status of acquisition of face images performed by the face image acquisition unit 12c, respectively, in a similar manner to the bar-like gage SF16. Specifically, the frame-like gages SF18L and SF18R change the lengths thereof so as to extend from the bottom to the top in accordance with the acquisition rate of face images performed by the face image acquisition unit 12c, respectively.

On the frame surrounding the moving image display region SF12 formed of the frame-like gages SF18L and SF18R, the face icon SF144 is arranged at the center on the upper side, and the bar-like gage SF16 is arranged at the center on the lower side. The frame-like gages SF18L and SF18R indicate an acquisition rate of face images of 0% at the center of the bar-like gage SF16 and indicate an acquisition rate of face images of 100% at the reaching point at the face icon SF144, respectively.

The "Use password" button SF20 is a button used for switching the authentication scheme used for login to a particular application program from a face authentication scheme to a password scheme. The user is able to switch the authentication scheme used for login to a password scheme which requires entry of a password by pushing the "Use password" button SF20.

The "Cancel" button SF22 is a button used for cancelling face authentication used for login to a particular application program. The user is able to cancel face authentication by pushing the "Cancel" button SF22.

Once the face authentication window is displayed, as illustrated in Fig. 2, the movement instruction unit 12b causes the display unit 20 to display an instruction message, which provides an instruction about a particular movement, and a face icon, which moves as an animation with a particular movement, in the face authentication window and instructs the user about the particular movement (step S108). The movement instruction unit 12b can provide an instruction about a movement of shaking the head by using an instruction message, a face icon, or the like, for example.

Once the user is instructed by the movement instruction unit 12b to perform a particular movement, the face image acquisition unit 12c attempts acquisition of a predefined number of user's face images necessary for impersonation determination until the time limit elapses.

First, the face image acquisition unit 12c determines whether or not a user's particular movement in the moving image captured by the capture unit 22 is proper (step S110).

If it is determined by the face image acquisition unit 12c that the user's particular movement is improper (step S110, NO), unless the time limit has elapsed (step S112, NO), the movement instruction unit 12b controls and changes the display providing an instruction about a particular movement (step S114). In this case, the movement instruction unit 12b may continue the movement of the face icon shaking the head, may cause the movement of the face icon shaking the head to be wider, or may emphasize and display an instruction message "Please shake your head" on the display unit 20, for example. The face image acquisition unit 12c then continues to determine whether or not the user's particular movement is proper (step S110). Note that, if the time limit has elapsed (step S112, YES), the process proceeds to step S138 described below.

On the other hand, if it is determined by the face image acquisition unit 12c that the user's particular movement is proper (step S110, YES), the movement instruction unit 12b controls and changes the display providing the instruction about a particular movement (step S116). In this case, the movement instruction unit 12b may stop the movement of the face icon shaking the head or may change display of the face icon so as to have a smiling facial expression or the like which associates that the user's particular movement is proper, for example.

If the face image acquisition unit 12c determines that the user's particular movement is proper (step S110, YES), the face image acquisition unit 12c detects a face image of the user in the moving image captured by the capture unit 22 (step S118).

Next, the face image acquisition unit 12c evaluates the quality of the detected face image (step S120). If the face image acquisition unit 12c determines that the quality of the face image is not above a predetermined quality (step S120, NO), the process proceeds to step S110 described above to again attempt acquisition of face images.

On the other hand, if the face image acquisition unit 12c determines that the quality of the face image is above a predetermined quality (step S120, YES), the face image acquisition unit 12c acquires a high quality face image having a quality above the predetermined quality (step S122).

In response to acquiring face images, the face image acquisition unit 12c controls and changes the display indicating the progress status of acquisition of face images, such as a gage, a progress bar, a numerical value in a form of percentage indicating an acquisition rate of face images, or the like (step S124).

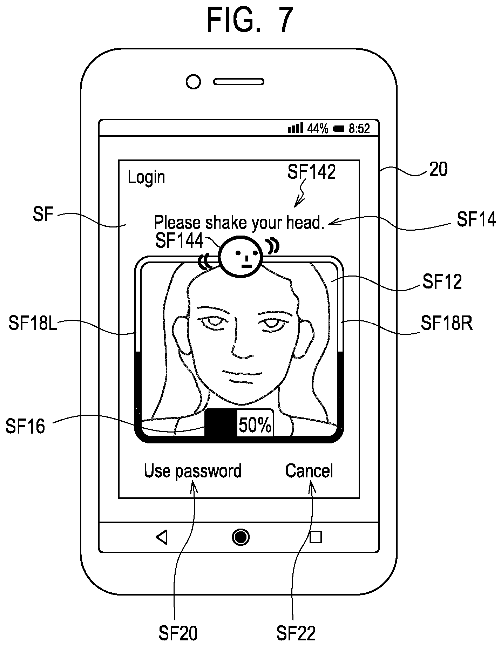

Fig. 7 illustrates one example of the face authentication window SF when face images are being acquired by the face image acquisition unit 12c. Note that Fig. 7 illustrates the face authentication window SF when the acquisition rate of face images is 50%. In the face authentication window SF during acquisition of face images, the bar-like gage SF16 extends from the left to the right, and the frame-like gages SF18L and SF18R extend from the bottom to the top as the number of acquired face images increases, as illustrated in Fig. 7. Further, the numerical value of the acquisition rate of face images inside the bar-like gage SF16 increases as the number of acquired face images increases.

Next, as illustrated in Fig. 2, the face image acquisition unit 12c determines whether or not a predefined number of face images necessary for impersonation determination is acquired (step S126). If the face image acquisition unit 12c determines that the predefined number of face images have not been acquired (step S126, NO), unless the time limit has elapsed (step S128, NO), the face image acquisition unit 12c enters step S110 described above to again attempt acquisition of face images. Note that, if the time limit has elapsed (step S128, YES), the process proceeds to step S138 described later.

On the other hand, if the face image acquisition unit 12c determines that the predefined number of face images have been acquired (step S126, YES), the impersonation determination unit 12e performs impersonation determination (step S130), and the face recognition unit 12f performs face recognition (step S132). Note that any one of the impersonation determination by the impersonation determination unit 12e and the face recognition by the face recognition unit 12f may be performed earlier than the other and may be performed in parallel. Further, the face recognition unit 12f can perform face recognition by using already acquired face images at the time before the predefined number of face images are acquired by the face image acquisition unit 12c.

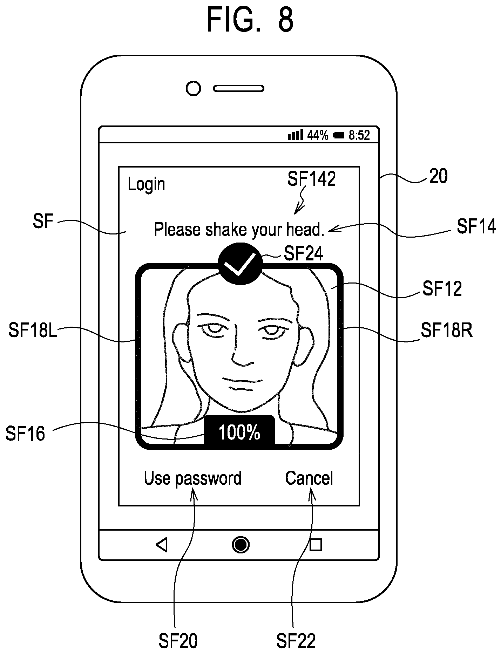

Note that Fig. 8 illustrates one example of the face authentication window SF at completion of acquisition of the predefined number of face images performed by the face image acquisition unit 12c. As illustrated in Fig. 8, in the face authentication window SF at the completion of acquisition of face images, the bar-like gage SF16 and the frame-like gages SF18L and SF18R have extended at the maximum, respectively. Further, the acquisition ratio of face images inside the bar-like gage SF16 is 100%. Further, in the face authentication window SF at the completion of acquisition of face images, a completion icon SF24 indicating the completion of acquisition of face images is displayed instead of the face icon SF144, and the completion of the process is visually indicated to the user.

The impersonation determination unit 12e first estimates a three-dimensional shape of the user's face based on a plurality of face images acquired by the face image acquisition unit 12c as illustrated in Fig. 3 (step S202).

Next, the impersonation determination unit 12e evaluates whether or not the estimated three-dimensional shape is three-dimensional (step S204).

If the impersonation determination unit 12e evaluates that the estimated three-dimensional shape is three-dimensional (step S204, YES), the impersonation determination unit 12e determines that the user's face is a face of a living body and is not impersonated (step S206).

On the other hand, if the impersonation determination unit 12e evaluates that the estimated three-dimensional shape is not three-dimensional, that is, is two-dimensional (step S204, NO), the impersonation determination unit 12e determines that the user's face is impersonated by a photograph, a moving image, or the like (step S208).

On the other hand, the face recognition unit 12f first selects a target face image used for comparison with a registered face image from the plurality of face images acquired by the face image acquisition unit 12c, as illustrated in Fig. 4 (step S302).

Further, the face recognition unit 12f reads and acquires a registered face image to be compared with the target face image from the storage unit 16 or the like (step S304).

Next, the face recognition unit 12f calculates a matching score indicating the similarity between a feature amount of the target face image and a feature amount of the registered face image (step S306).

Next, the face recognition unit 12f determines whether or not the calculated matching score is greater than or equal to a predetermined threshold (step S308).

If the face recognition unit 12f determines that the matching score is greater than or equal to a predetermined threshold (step S308, YES), the face recognition unit 12f determines that there is a matching in the comparison between the target face image and the registered face image, that is, there is a matching in the face recognition (step S310).

On the other hand, if the face recognition unit 12f determines that the matching score is less than the predetermined threshold (step S308, NO), the face recognition unit 12f determines that there is no matching in the comparison between the target face image and the registered face image, that is, there is no matching in the face recognition (step S312).

Note that the face recognition unit 12f may perform the process illustrated in Fig. 4 using already acquired face images even at the time before the predefined number of face images are acquired by the face image acquisition unit 12c.

Next, as illustrated in Fig. 2, the authentication processing unit 12a determines whether or not face authentication of the user is successful based on a result of the impersonation determination performed by the impersonation determination unit 12e and a result of the face recognition performed by the face recognition unit 12f (step S134).

If the authentication processing unit 12a determines that the face authentication of the user is successful (step S134, YES), the authentication processing unit 12a permits the user to log in a particular application program and performs a login process to allow the user to log in (step S136). The authentication processing unit 12a performs the login process and causes the display unit 20 to display a window after login of the particular application. The authentication processing unit 12a determines that the face authentication is successful if it is determined by the impersonation determination unit 12e that there is no impersonation (step S206) and it is determined by the face recognition unit 12f that there is a matching in the face recognition (step S310).

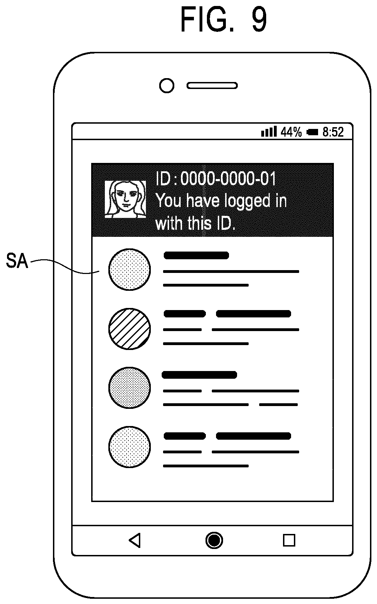

Fig. 9 is illustrated as a window after login SA of a particular application after face authentication succeeded. As illustrated in Fig. 9, the window after login SA is a window of the particular application logged in by the user.

On the other hand, if the authentication processing unit 12a determines that the face authentication of the user failed (step S134, NO), the authentication processing unit 12a rejects login of the user to the particular application program. If it is determined by the impersonation determination unit 12e that there is impersonation (step S208) or if it is determined by the face recognition unit 12f that there is no matching in the face recognition (step S312), the authentication processing unit 12a determines that the face authentication failed. In this case, the authentication processing unit 12a performs a failure process such as a process that notifies the user that the face authentication failed (step S140).

As described above, unlike the case where the predefined number of face images are acquired by the face image acquisition unit 12c and face authentication is performed, face authentication may fail as a result that the predefined number of face images were not obtained and the time limit has elapsed (step S112, YES or step S128, YES). In these cases, the information provide unit 12d provides guidance information regarding a user's particular movement or an authentication environment in accordance with a reason for the face images being unable to be acquired by the face image acquisition unit 12c (step S138). For example, the information provide unit 12d can display guidance information on the display unit 20 or output a voice from the audio output unit 24 to provide the guidance information to the user. Thereby, it is possible to improve the probability of the predefined number of face images being acquired by the face image acquisition unit 12c within the time limit when face authentication is again performed.

Next, the authentication processing unit 12a performs a failure process such as a process to notify the user that the face authentication failed (step

S140).

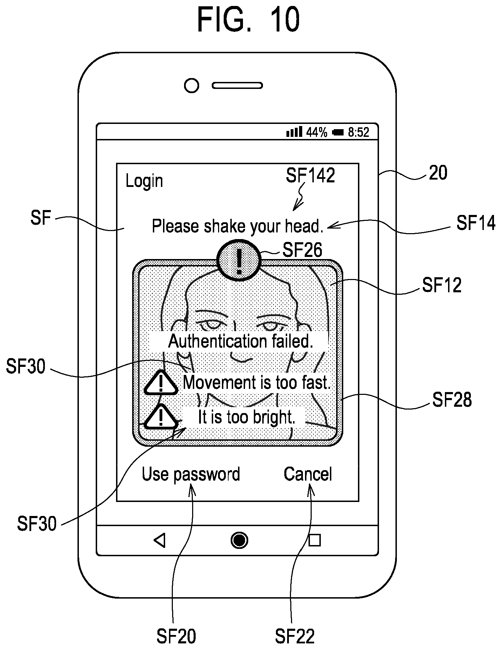

Fig. 10 illustrates the face authentication window SF at a face authentication failure when the face authentication failed because the predefined number of face images have not been acquired and the time limit has elapsed. As illustrated in Fig. 10, in the face authentication window SF at the face authentication failure, a failure icon SF26 such as an exclamation mark icon indicating that the predefined number of face images have not been acquired and thus the face authentication failed is displayed instead of the face icon SF144. Further, instead of the frame-like gages SF18L and SF18R, a failure frame SF28 indicating that the face authentication failed by using a different color or the like from the frame-like gages SF18L and SF18R is displayed around the moving image display region SF12, for example. Further, while displaying a color moving image captured by the capture unit 22 when face images are acquired, the moving image display region SF12 displays a grayscale frame or a black and white frame at a particular point of time of a moving image captured by the capture unit 22 when face authentication fails, for example. Thereby, the moving image display region SF12 indicates that face authentication failed.

Furthermore, in the moving image display region SF12, a guidance message SF30 is displayed as guidance information provided by the information provide unit 12d. For example, the guidance message SF30 is a message having the content in accordance with a reason for a failure in acquisition of the predefined number of face images, such as "Motion is too fast", "It is too bright", or the like.

In such a way, face authentication is performed for the user by the information processing apparatus 10 according to the present example embodiment.

As discussed above, according to the present example embodiment, display providing an instruction about a particular movement on the display unit 20 is controlled and changed, and the progress status of acquisition of face images is displayed on the display unit 20 in accordance with the movement status of the user in the movement captured by the capture unit 22. Therefore, according to the present example embodiment, a face image that is biometrics information necessary for impersonation determination can be properly acquired based on a user's movement.

### [Second Example Embodiment]

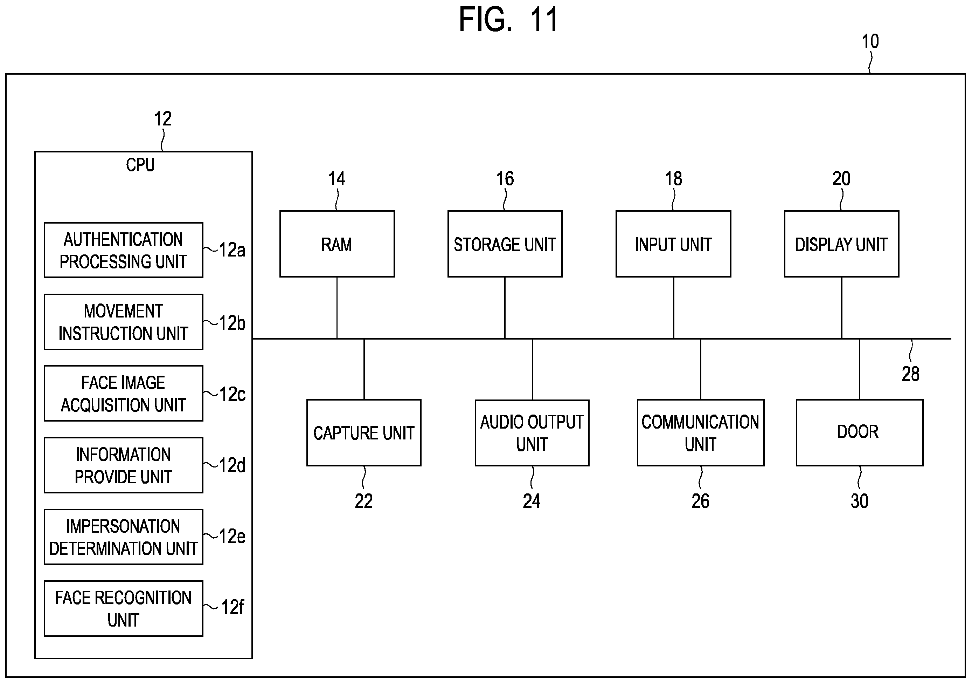

An information processing apparatus according to a second example embodiment of this disclosure will be described by using Fig. 11. Fig. 11 is a block diagram illustrating a configuration of the information processing apparatus according to the present example embodiment. Note that the same components as those in the first example embodiment described above are labeled with the same references, and the description thereof will be omitted or simplified.

While the case where the information processing apparatus 10 is configured to perform face authentication at login to a particular application has been described in the first example embodiment described above, the invention is not limited thereto. For example, face authentication may be performed at entry to a particular place such as a room, an area, or the like. In the present example embodiment, a case where an information processing apparatus is configured as a control apparatus that controls a door such as an automatic door, a gate, or the like to restrict entry to a particular place and performs face authentication at entry to the particular place will be described.

As illustrated in Fig. 11, an information processing apparatus 210 according to the present example embodiment has a door 30 that restricts entry to a particular place in addition to the configuration of the information processing apparatus 10 according to the first example embodiment illustrated in Fig. 1.

The door 30 is formed of an automatic door, a security gate, or the like, for example, and installed at an entrance of a particular place such as a room, an area, or the like where entry of the user is restricted. The door 30 performs a door-open operation and a door-close operation under the control of the CPU 12.

The information processing apparatus 210 according to the present example embodiment performs the same face authentication as in the information processing apparatus 10 according to the first example embodiment described above when the user enters a particular place where entry is restricted by the door 30. That is, the information processing apparatus 210 according to the present example embodiment opens the door 30 when face authentication is successful and permits entry of the user to a particular place. On the other hand, the information processing apparatus 210 maintains the door 30 to be closed when face authentication fails and rejects entry of the user to a particular place.

As with the present example embodiment, the information processing apparatus can be configured to perform the same face authentication as the first example embodiment at entry to a particular place.

Further, in addition to the above, face authentication may be performed at login to a server from a user terminal, for example. Accordingly, the information processing apparatus can be configured as a server that accepts login from a user terminal via a network, and face authentication can be performed at login from the user terminal. In such a case, an information processing apparatus configured as a server may have the configuration that functions as the CPU 12, the RAM 14, and the storage unit 16 that are the same as those of the first example embodiment. The user terminal may have the configuration that functions as the input unit 18, the display unit 20, the capture unit 22, and the audio output unit 24 that are the same as those of the first example embodiment, for example.

As discussed above, an information processing apparatus can be configured to perform the same face authentication as that in the first example embodiment in various scenes that require authentication.

### [Another Example Embodiment]

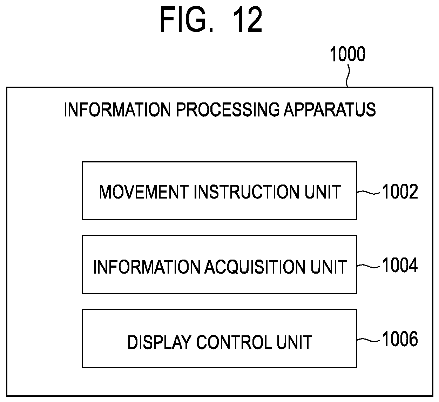

The information processing apparatus described in the above example embodiments may be configured as illustrated in Fig. 12 according to another example embodiment. Fig. 12 is a block diagram illustrating the configuration of the information processing apparatus according to another example embodiment.

As illustrated in Fig. 12, an information processing apparatus 1000 according to another example embodiment has a movement instruction unit 1002 that instructs the user about a movement and an information acquisition unit 1004 that acquires biometrics information on the user from the user instructed about the movement. Further, the information processing apparatus 1000 has a display control unit 1006 that controls display directed to the user in accordance with the movement status of the user.

According to another example embodiment, display directed to the user is controlled in accordance with the movement status of the user. Thereby, according to another example embodiment, necessary biometrics information can be suitably acquired based on the user's movement.

### [Modified Example Embodiment]

This disclosure is not limited to the example embodiments described above, and various modifications are possible.

For example, while the case where a plurality of face images are acquired as biometrics information used for impersonation determination has been described as an example in the above example embodiments, the invention is not limited thereto. As biometrics information, a gait image, a fingerprint image, an iris image, a finger vein image, a palm image, a palm vein image, or the like may be acquired other than a face image. Biometrics authentication may be performed by using biometrics information acquired from a user instructed to perform a particular movement instead of face authentication using a face image as biometrics information.

Further, while the case where face images acquired as biometrics information is used to perform impersonation determination and face recognition has been described as an example in the above example embodiments, the invention is not limited thereto. The acquired biometrics information such as a face image can be utilized for various purposes.

Further, the information processing apparatuses 10 and 210 according to the example embodiments described above may be configured as a system including one or a plurality of apparatuses.

Further, the scope of each of the example embodiments includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the computer program described above is stored but also the computer program itself.

As the storage medium, a floppy (registered trademark) disk, a hard disk, an optical disk, a magneto-optical disk, a compact disk-read only memory (CD-ROM), a magnetic tape, a non-volatile memory card, or a ROM, for example, may be used. Further, the scope of each example embodiment includes not only those executing a process with a program itself stored in the storage medium but also those operating on an operating system (OS) in cooperation with the function of another software or an extension board to execute the process.

Services realized by the function of each example embodiment described above can be provided to the user in a form of Software as a Service (SaaS).

While this disclosure has been described with reference to the example embodiments, this disclosure is not limited to the example embodiment described above. Various modification that can be understood by those skilled in the art can be made to the configuration or the details of this disclosure within the scope of this disclosure.

### [Reference Signs List]

10, 210 information processing apparatus
12 CPU
12a authentication processing unit
12b movement instruction unit
12c face image acquisition unit
12d information provide unit
12e impersonation determination unit
12f face recognition unit
14 RAM
16 storage unit
18 input unit
20 display unit
22 capture unit
24 audio output unit
26 communication unit
28 common bus
30 door

## Claims

1. An information processing apparatus comprising:
movement instruction means (12b) for instructing a user to perform a head movement by causing display means (20) to display a corresponding instruction about the head movement; and
information acquisition means (12c) for acquiring biometrics information on the user, which is a plurality of face images, from the user instructed about the head movement,
wherein the information acquisition means (12c) is configured to determine whether a head movement by the user is improper so that the information acquisition means (12c) is unable to acquire a plurality of face images that can be used in impersonation determination to estimate a three-dimensional shape of the user's head, and
the movement instruction means (12b) is configured to change the display of the instruction about the head movement when the information acquisition means (12c) determines that the head movement by the user is improper,
the information acquisition means (12c) is configured to display on display means (20) a gage whose length changes in accordance with an acquisition rate of a predetermined number of face images required for impersonation determination.

2. The information processing apparatus according to claim 1, further comprising display control means (12c) for causing the display means (20) to display progress status of acquisition of the biometrics information.

3. The information processing apparatus according to claim 1 or 2 further comprising information provide means (12d) for providing guidance information when the information acquisition means (12c) is unable to acquire the predetermined number of face images within a predetermined time period.

4. The information processing apparatus according to claim 3, wherein the guidance information is information regarding a head movement or an environment of the user.

5. The information processing apparatus according to any one of claims 1 to 4 further comprising impersonation determination means (12e) for determining, based on the estimated three-dimensional shape, whether or not the user is impersonated.

6. The information processing apparatus according to claim 5 further comprising comparison means (12f) for comparing one or more of the face images acquired by the information acquisition means (12c) with registered biometrics information.

7. The information processing apparatus according to claim 6, wherein the information acquisition means (12c) stops acquisition of the biometrics information when there is no matching in comparison performed by the comparison means (12f).

8. The information processing apparatus according to claim 6 or 7 further comprising authentication processing means (12a) for performing authentication on the user based on a result of determination performed by the impersonation determination means (12e) and a result of comparison performed by the comparison means (12f).

9. An information processing method by a computer having display means (20), comprising:
instructing a user to perform a head movement by causing the display means (20) to display a corresponding instruction about the head movement;
acquiring biometrics information on the user, which is a plurality of face images, from the user instructed about the head movement;
determining whether a head movement by the user is improper so that it is impossible to acquire a plurality of face images that can be used in impersonation determination to estimate a three-dimensional shape of the user's head;
changing the display of the instruction about the head movement when it is determined that the head movement by the user is improper; and
displaying a gage whose length changes in accordance with an acquisition rate of a predetermined number of face images required for impersonation determination.

10. A program that causes a computer to perform the method according to claim 9.

## Patentansprüche

1. Informationsverarbeitungsvorrichtung, umfassend:
ein Bewegungsanweisungsmittel (12b) zum Anweisen eines Benutzers, eine Kopfbewegung auszuführen, durch Veranlassen, dass ein Anzeigemittel (20) eine entsprechende Anweisung über die Kopfbewegung anzeigt; und
ein Informationserlangungsmittel (12c) zum Erlangen biometrischer Informationen über den Benutzer, die eine Vielzahl von Gesichtsbildern sind, von dem über die Kopfbewegung angewiesenen Benutzer,
wobei das Informationserlangungsmittel (12c) konfiguriert ist, um zu bestimmen, ob eine Kopfbewegung durch den Benutzer ungeeignet ist, so dass das Informationserlangungsmittel (12c) nicht in der Lage ist, eine Vielzahl von Gesichtsbildern zu erlangen, die bei der Personifikationsbestimmung verwendet werden können, um eine dreidimensionale Form des Kopfes des Benutzers zu schätzen, und
das Bewegungsanweisungsmittel (12b) konfiguriert ist, um die Anzeige der Anweisung über die Kopfbewegung zu ändern, wenn das Informationserlangungsmittel (12c) bestimmt, dass die Kopfbewegung durch den Benutzer ungeeignet ist;
das Informationserlangungsmittel (12c) konfiguriert ist, um auf dem Anzeigemittel (20) ein Maß anzuzeigen, dessen Länge sich gemäß einer Erlangungsrate einer vorbestimmten Anzahl von für eine Personifikationsbestimmung erforderlichen Gesichtsbildern ändert.

2. Informationsverarbeitungsvorrichtung nach Anspruch 1, die weiterhin ein Anzeigesteuermittel (12c) zum Veranlassen, dass das Anzeigemittel (20) einen Fortschrittsstatus einer Erlangung der biometrischen Informationen anzeigt, umfasst.

3. Informationsverarbeitungsvorrichtung nach Anspruch 1 oder 2, die weiterhin ein Informationsbereitstellungsmittel (12d) zum Bereitstellen von Führungsinformationen, wenn das Informationserlangungsmittel (12c) nicht in der Lage ist, die vorbestimmte Anzahl von Gesichtsbildern innerhalb einer vorbestimmten Zeitperiode zu erlangen, umfasst.

4. Informationsverarbeitungsvorrichtung nach Anspruch 3, wobei die Führungsinformationen Informationen bezüglich einer Kopfbewegung oder einer Umgebung des Benutzers sind.

5. Informationsverarbeitungsvorrichtung nach einem der Ansprüche 1 bis 4, die weiterhin ein Personifikationsbestimmungsmittel (12e) zum Bestimmen, basierend auf der geschätzten dreidimensionalen Form, ob der Benutzer imitiert wird oder nicht, umfasst.

6. Informationsverarbeitungsvorrichtung nach Anspruch 5, die weiterhin ein Vergleichsmittel (12f) zum Vergleichen eines oder mehrerer der durch das Informationserlangungsmittel (12c) erfassten Gesichtsbilder mit registrierten biometrischen Informationen umfasst.

7. Informationsverarbeitungsvorrichtung nach Anspruch 6, wobei das Informationserlangungsmittel (12c) eine Erlangung der biometrischen Informationen stoppt, wenn es bei einem durch das Vergleichsmittel (12f) durchgeführten Vergleich keinen Abgleich gibt.

8. Informationsverarbeitungsvorrichtung nach Anspruch 6 oder 7, die weiterhin ein Authentifizierungsverarbeitungsmittel (12a) zum Durchführen einer Authentifizierung an dem Benutzer basierend auf einem Ergebnis einer durch das Personifikationsbestimmungsmittel (12e) durchgeführten Bestimmung und einem Ergebnis eines durch das Vergleichsmittel (12f) durchgeführten Vergleichs umfasst.

9. Informationsverarbeitungsverfahren durch einen Computer mit einem Anzeigemittel (20), umfassend:
Anweisen, dass ein Benutzer eine Kopfbewegung durchführt, durch Veranlassen, dass das Anzeigemittel (20) eine entsprechende Anweisung über die Kopfbewegung anzeigt;
Erlangen biometrischer Informationen über den Benutzer, die eine Vielzahl von Gesichtsbildern sind, von dem über die Kopfbewegung angewiesenen Benutzer;
Bestimmen, ob eine Kopfbewegung durch den Benutzers ungeeignet ist, so dass es unmöglich ist, eine Vielzahl von Gesichtsbildern zu erlangen, die bei einer Personifikationsbestimmung verwendet werden können, um eine dreidimensionale Form des Kopfes des Benutzers zu schätzen;
Ändern der Anzeige der Anweisung über die Kopfbewegung, wenn bestimmt wird, dass die Kopfbewegung durch den Benutzer ungeeignet ist; und
Anzeigen eines Maßes, dessen Länge sich gemäß einer Erlangungsrate einer vorbestimmten Anzahl von für eine Personifikationsbestimmung erforderlichen Gesichtsbildern ändert.

10. Programm, das veranlasst, dass ein Computer das Verfahren nach Anspruch 9 durchführt.

## Revendications

1. Appareil de traitement d'informations comportant :
un moyen d'instruction de mouvement (12b) pour donner l'instruction à un utilisateur d'effectuer un mouvement de tête en amenant un moyen d'affichage (20) à afficher une instruction correspondante concernant le mouvement de tête ; et
un moyen d'acquisition d'informations (12c) pour acquérir des informations biométriques sur l'utilisateur, qui sont une pluralité d'images faciales, auprès de l'utilisateur ayant reçu l'instruction concernant le mouvement de tête,
dans lequel le moyen d'acquisition d'informations (12c) est configuré pour déterminer si un mouvement de tête par l'utilisateur est inapproprié de sorte que le moyen d'acquisition d'informations (12c) est incapable d'acquérir une pluralité d'images faciales qui peuvent être utilisées dans la détermination d'usurpation d'identité pour estimer une forme tridimensionnelle de la tête de l'utilisateur, et
le moyen d'instruction de mouvement (12b) est configuré pour modifier l'affichage de l'instruction concernant le mouvement de tête lorsque le moyen d'acquisition d'informations (12c) détermine que le mouvement de tête par l'utilisateur est inapproprié,
le moyen d'acquisition d'informations (12c) est configuré pour afficher sur le moyen d'affichage (20) une jauge dont la longueur change selon un taux d'acquisition d'un nombre prédéterminé d'images faciales nécessaires à la détermination d'usurpation d'identité.

2. Appareil de traitement d'informations selon la revendication 1, comportant en outre un moyen de commande d'affichage (12c) pour amener le moyen d'affichage (20) à afficher l'état de progression de l'acquisition des informations biométriques.

3. Appareil de traitement d'informations selon la revendication 1 ou 2 comportant en outre un moyen de fourniture d'informations (12d) pour fournir des informations de guidage lorsque le moyen d'acquisition d'informations (12c) est incapable d'acquérir le nombre prédéterminé d'images faciales dans une période de temps prédéterminée.

4. Appareil de traitement d'informations selon la revendication 3, dans lequel les informations de guidage sont des informations concernant un mouvement de tête ou un environnement de l'utilisateur.

5. Appareil de traitement d'informations selon l'une quelconque des revendications 1 à 4 comportant en outre un moyen de détermination d'usurpation d'identité (12e) pour déterminer, sur la base de la forme tridimensionnelle estimée, si l'identité de l'utilisateur est usurpée ou non.

6. Appareil de traitement d'informations selon la revendication 5 comportant en outre un moyen de comparaison (12f) pour comparer une ou plusieurs des images faciales acquises par le moyen d'acquisition d'informations (12c) avec des informations biométriques enregistrées.

7. Appareil de traitement d'informations selon la revendication 6, dans lequel le moyen d'acquisition d'informations (12c) arrête l'acquisition des informations biométriques lorsqu'il n'y a pas de correspondance dans la comparaison effectuée par le moyen de comparaison (12f).

8. Appareil de traitement d'informations selon la revendication 6 ou 7 comportant en outre un moyen de traitement d'authentification (12a) pour effectuer une authentification sur l'utilisateur sur la base d'un résultat de détermination effectuée par le moyen de détermination d'usurpation d'identité (12e) et d'un résultat de comparaison effectuée par le moyen de comparaison (12f).

9. Procédé de traitement d'informations par un ordinateur possédant un moyen d'affichage (20), comportant :
l'instruction à un utilisateur d'effectuer un mouvement de tête en amenant le moyen d'affichage (20) à afficher une instruction correspondante concernant le mouvement de tête ;
l'acquisition d'informations biométriques sur l'utilisateur, qui est une pluralité d'images faciales, auprès de l'utilisateur ayant reçu l'instruction concernant le mouvement de tête ;
le fait de déterminer si un mouvement de tête par l'utilisateur est inapproprié de sorte qu'il est impossible d'acquérir une pluralité d'images faciales qui peuvent être utilisées dans la détermination d'usurpation d'identité pour estimer une forme tridimensionnelle de la tête de l'utilisateur ;
la modification de l'affichage de l'instruction concernant le mouvement de la tête lorsqu'il est déterminé que le mouvement de la tête par l'utilisateur est inapproprié ; et
l'affichage d'une jauge dont la longueur change selon un taux d'acquisition d'un nombre prédéterminé d'images faciales nécessaires à la détermination d'usurpation d'identité.

10. Programme qui amène un ordinateur à réaliser le procédé selon la revendication 9.
